# EUROPÄISCHE PATENTSCHRIFT

(11) **EP 3 296 826 B1**
(45) Veröffentlichungstag und Bekanntmachung des Hinweises auf die Patenterteilung: **07.04.2021**
(21) Anmeldenummer: 17189461.1
(22) Anmeldetag: 05.09.2017
(51) Int. Cl.: G05B 19/042

(54) **VERFAHREN UND ANORDNUNG ZUR INBETRIEBNAHME VON REGEL- UND STEUERGERÄTEN FÜR EINE GEBÄUDEAUTOMATISIERUNG**
METHOD AND ARRANGEMENT FOR PUTTING INTO OPERATION CONTROL AND REGULATION DEVICES FOR A BUILDING AUTOMATION SYSTEM
PROCÉDÉ ET AGENCEMENT DE MISE EN SERVICE DES APPAREILS DE RÉGLAGE ET DE COMMANDE POUR UNE AUTOMATISATION DE BÂTIMENT

(30) Priorität: 07.09.2016 DE 102016216921
(43) Veröffentlichungstag der Anmeldung: 21.03.2018
(73) Patentinhaber: Siemens Schweiz AG, 8047 Zürich (CH)
(72) Erfinder: Gollackner, Thomas, 6315 Oberägeri (CH); Guelderen, Oezguer, 6300 Zug (CH)
(74) Vertreter: Maier, Daniel Oliver

(56) Entgegenhaltungen:
- US-A1- 2013 054 033
- US-A1- 2014 172 121

## Beschreibung

Die Erfindung betrifft ein Verfahren und eine Anordnung zur Inbetriebnahme eines Regel- und Steuergerätes für Feldgeräte für eine Gebäudeautomatisierung.

Die Inbetriebnahme von Regel- und Steuergeräten bei einer Gebäudeautomatisierung z.B. für Heizung-, Lüftung- oder Klimafunktionalität (HLK) wird heutzutage oft unzureichend dokumentiert. Insbesondere erfolgt bei der Inbetriebnahme dieser Geräte oft eine unzureichende bzw. lückenhafte Testdokumentation. Dadurch verzögert sich u.a. die Fehlerbehebung. Auch ist die Projektfortschrittsverfolgung bei der Inbetriebnahme von HLK-Produkten in Gebäuden oft intransparent für den verantwortlichen Projektleiter.

Die US Patentanmeldung US 2014/0172121 A1 offenbart ein System und eine Methode zur Konfiguration eines Feldgerätes eines Kontrollsystems, wobei ein mobiles Gerät zur Kommunikation mit dem Feldgerät vorgesehen ist.

Die US Patentanmeldung US 2013/0054033 A1 offenbart ein System und eine Methode zur Kontrolle von Feldgeräten in einem Gebäude, wobei über ein mobiles Gerät an Positionen im Gebäude Informationen zum Gebäude ablesbar sind. Das mobile Gerät leitet die eingelesenen Informationen an ein Gebäudekontrollsystem weiter, welches die Informationen zur Kontrolle der Feldgeräte verwendet.

Der Fortschritt der Inbetriebnahme wird heutzutage mit Hilfe eines Inbetriebnahmetools am Notebook oder mittels Datenpunktlisten auf Papier dokumentiert. Problembeschreibungen werden hauptsächlich als Text eingegeben, oft ist der eingegebene Text bruchstückhaft. Die Dokumentation der Inbetriebnahme erfolgt individuell und manuell vom jeweiligen Inbetriebnahmetechniker. Die Dokumentation ist somit zeitaufwendig und oft lückenhaft.

Es ist daher die Aufgabe der vorliegenden Erfindung ein Verfahren und eine Anordnung zur Inbetriebnahme eines Regel- und Steuergerätes für Feldgeräte für eine Gebäudeautomatisierung bereitzustellen, wobei insbesondere eine effiziente und vollständige Dokumentation der Inbetriebnahme erfolgt.

Die Aufgabe wird gelöst durch ein Verfahren zur Inbetriebnahme eines Regel- und Steuergerätes für Feldgeräte für eine Gebäudeautomatisierung, wobei zwischen dem Regel- und Steuergerät und einem mobilen Kommunikationsendgerät eines Benutzers eine Kommunikationsverbindung erstellt wird; wobei das mobile Kommunikationsendgerät dazu eingerichtet ist, über die Kommunikationsverbindung Datenpunkte des Regel- und Steuergerätes abzufragen und auf ihren jeweiligen Zustand zu überprüfen, wobei ein Datenpunkt den Zustand eines Parameters eines Feldgerätes repräsentiert; und wobei das mobile Kommunikationsendgerät weiter dazu eingerichtet ist, den jeweiligen Zustand der Datenpunkte über eine weitere Kommunikationsverbindung an eine zentrale Stelle zu übertragen. Mobile Kommunikationsendgeräte (z.B. Smartphones, Tablet-Computer) sind heutzutage weitverbreitet und mit leistungsfähigen Prozessoren und Speichern ausgestattet. Mit mobilen Kommunikationsendgeräten sind Kommunikationsverbindungen mit entsprechend ausgestatteten Regel- und Steuergeräten (z.B. Controller) oder mit zentralen Stellen (z.B. Leitstelle, Gebäudeleitstelle, Gebäudemanagementsystem, Server) leicht herstellbar, z.B. über WLAN oder Internet. Das mobile Kommunikationsendgerät ist über ein installiertes Softwareprogramm (z.B. App) dazu eingerichtet, über die Kommunikationsverbindung Datenpunkte des Regel- und Steuergerätes abzufragen und auf ihren jeweiligen Zustand zu überprüfen.

Die App (d.h. das Softwareprogramm) wird z.B. über eine URL vom Internet (Android: Play Store, iOS: AppStore) auf das mobile Kommunikationsendgerät installiert.

In der zentralen Stelle können die übertragenen Datenpunkte weiter analysiert werden, insbesondere kann der Projektfortschritt bei der Inbetriebnahme der Regel- und Steuergeräte protokolliert und nachvollzogen werden und der Fortschritt überprüft werden.

Ein Datenpunkt ist insbesondere eine Bezeichnung für eine Eingabe- oder Ausgabefunktion bestehend aus allen zugeordneten Informationen (welche den Aktualwert und/oder Zustand und Parameter (Eigenschaften und Attribute), z. B. Signalart und Signalkennlinie, Messbereich, Einheit und Zustandstexte umfassen), welche ihre Bedeutung (Semantik) vollständig beschreiben und die über eine Datenpunktadresse und/oder eine Benutzeradresse, identifiziert wird.

Unter Inbetriebnahme wird insbesondere das Einstellen eines Systems, einer Anlage oder Maschine verstanden. D.h. insbesondere Maßnahmen und Handlungen (z. B. Konfiguration, Parametrierung, Optimierung und Test), die notwendig sind, um eine Maschine oder Anlage betriebsbereit bzw. einsatzbereit zu machen. Eine Inbetriebnahme umfasst Maßnahmen und Tätigkeiten, die nach der Montage der Hardware bzw. nach der Installation der Software zur Einrichtung und Prüfung des Produkts/Systems durchgeführt werden.

Unter einem Feldgerät werden insbesondere Sensoren und Aktoren verstanden. Zustände der Feldgeräte werden im Regel und Steuergerät (z.B. Controller) auf entsprechende Datenpunkte abgebildet.

Erfindungsgemäß wird der Verbauungsort des Regel- und Steuergerätes in einem Gebäude durch ein entsprechendes Positionssignal dem mobilen Kommunikationsendgerät mitgeteilt. Das Regel- und Steuergerät bzw. der Controller für die Steuerung von HLK- oder Raumautomatisierungsanwendungen ist dezentral in einem Raum montiert und oft schwer auffindbar, in der Regel in der Zwischendecke, unter einem Fensterpanel, oder im Zwischenboden). Das erschwert für den Inbetriebsetzer das Auffinden (Lokalisierung) des Regel- und Steuergerätes bzw. des Controllers. Durch das Positionssignal wird z.B. ein Inbetriebsetzer direkt zum Verbauungsort des Regel- und Steuergerätes in einem Raum geführt. Unnötige Zeit zum Suchen des Regel- und Steuergerätes entfällt. Das Positionssignal kann satellitenbasiert (z.B. über GPS) oder durch ein Indoor Positioning System (IPS, System zur Indoor-Positions-bestimmung) bereitgestellt werden. Das mobile Kommunikationsendgerät (z.B. Smartphone) kann den Benutzer zum entsprechenden Regel- und Steuergerät navigieren (z.B. durch Sprachausgabe).

Erfindungsgemäß wird das Positionssignal vom Regel- und Steuergerät ausgesendet. Das Positionssignal kann z.B. durch einen kleinen Sender (z.B. Beacon, iBeacon) ausgegeben werden, der sich im oder am Regel- und Steuergerät befindet. Mit Vorteil basiert der Sender auf Bluetooth Low Energy (BLE)

Erfindungsgemäß werden die an die zentrale Stelle gesendeten Zustände der Datenpunkte in ein Gebäudemodell (BIM) für das entsprechende Gebäude übertragen. Bei der zentralen Stelle kann es sich z.B. um ein Gebäudeautomatisierungssystems bzw. Gebäudemanagementsystem handeln. Das Gebäudemodell (BIM, Building Information Model) des entsprechenden Gebäudes ist z.B. in einem Speicher (z.B. Flash-Speicher) des Gebäudeautomatisierungssystems abgelegt, bzw. in einer Datenbank auf die das Gebäudeautomatisierungssystem Zugriff hat. Durch die Übertragung der Zustände der Datenpunkte in ein Gebäudemodell wird die Konsistenz zwischen der im Gebäude installierten Geräte und dem elektronischen Gebäudemodell sichergestellt. Die Übertragung der Zustände der Datenpunkte in das Gebäudemodell kann online oder durch einen Batchlauf (z.B. abends oder zu festgelegten Zeitpunkten) erfolgen.

Eine vorteilhafte Ausgestaltung der Erfindung liegt darin, dass die Kommunikation zwischen dem Regel- und Steuergerät und dem mobilen Kommunikationsendgerät über eine drahtlose Verbindung (z.B. WLAN, NFC, Bluetooth) erfolgt. Üblicherweise sind in Gebäuden drahtlose Kommunikationsnetze schon installiert oder leicht nachrüstbar bzw. realisierbar. Mobile Kommunikationsendgeräte (z.B. Smartphones) sind für eine drahtlose Kommunikation üblicherweise mit entsprechender Hardware und Software ausgestattet.

Eine weitere vorteilhafte Ausgestaltung der Erfindung liegt darin, dass die drahtlose Verbindung zwischen dem Regel- und Steuergerät und dem mobilen Kommunikationsendgerät über ein vom Benutzer am Regel- und Steuergerät installiertes Gerät (z.B. ein Funkmodul) erfolgt. Wenn ein Regel- und Steuergerät nicht mit einem Sender/Empfänger für eine drahtlose Verbindung ausgestattet ist, kann ein Benutzer (z.B. Inbetriebsetzer) am Regel- und Steuergerät ein Gerät (z.B. WLAN-Adapter) für eine drahtlose Kommunikation mit dem mobilen Kommunikationsendgerät installieren und dadurch eine Kommunikationsverbindung zwischen dem Regel- und Steuergerät (z.B. Controller) und dem mobilen Kommunikationsendgerät einrichten.

Eine weitere vorteilhafte Ausgestaltung der Erfindung liegt darin, dass die an die zentrale Stelle gesendeten Zustände der Datenpunkte in ein Projektmanagementsystem (z.B. MS Project) übertragen werden. Dadurch kann der Projektfortschritt bei der Inbetriebnahme sehr leicht protokolliert und nachvollzogen werden.

Eine weitere vorteilhafte Ausgestaltung der Erfindung liegt darin, dass ein erkannter Fehlerzustand in einem Datenpunkt auf dem mobilen Kommunikationsendgerät angezeigt wird und wobei der erkannte Fehlerzustand vom Bediener mit weiteren Daten versehen, an die zentrale Stelle gesendet wird. Auf dem mobilen Kommunikationsendgerät des Bedieners ist eine Inbetriebnahme- und/oder Testsoftware für das in Betrieb zu nehmende Regel- und Steuergerät installiert (z.B. durch einen Internet-Download). Mit Hilfe dieser Software kann der Bediener mit dem mobilen Kommunikationsendgerät über die Kommunikationsverbindung Schritt für Schritt Testfälle auf dem Regel- und Steuergerät abarbeiten. Erkannte Fehler werden auf dem Display des Kommunikationsendgerätes angezeigt. Der Bediener kann eine Fehlermeldung bezüglich eines erkannten Fehlers vom Kommunikationsendgerät zur zentralen Stelle (z.B. Gebäudemanagementsystem, Leitstelle, Leitserver) senden und diese Fehlermeldung dediziert mit weiteren Daten zum Fehler versehen bzw. anreichern. Z.B. mit Daten zum Verbauungsort (z.B. Lage, Temperatur, Feuchtigkeit), Fotos von Gerät und/oder Verbauungsort, Einschätzung zur Fehlerursache und/oder Fehlerbehebung (Reparatur ausreichend oder Austausch erforderlich). Dadurch wird die Fehlerbeschreibung konkreter und umfassender. Die Analyse und Behebung der Fehlermeldung wird durch die anschauliche Dokumentation effektiver.

Eine weitere vorteilhafte Ausgestaltung der Erfindung liegt darin, dass der an die zentrale Stelle übertragene Zustand der Datenpunkte weitere Informationen umfasst, insbesondere eine Audionotiz und/oder ein Foto des dazugehörigen Feldgerätes. Dadurch kann in der zentralen Stelle z.B. verifiziert werden, ob die Inbetriebnahme erfolgt ist.

Eine weitere vorteilhafte Ausgestaltung der Erfindung liegt darin, dass durch die zentrale Stelle eine Auswertung der empfangenen Daten erfolgt und weitere Massnahmen eingeleitet werden. Die Auswertung bzw. Analyse der empfangenen StörMeldung kann in einem Server der zentralen Stelle (z.B. Gebäudeleitstelle) z.B. durch Mechanismen der künstlichen Intelligenz (KI) mit entsprechender Software erfolgen. Wenn z.B. als Massnahme eine Reparatur des Feldgerätes oder des Controllers erforderlich ist, kann einem erforderlichen Servicepersonal z.B. mitgeteilt werden, welche Ersatzteile mitzunehmen sind. Eine Auswertung der empfangenen Daten kann z.B. auf einer Foto- bzw. Bildanalyse beruhen, wenn die empfangenen Daten entsprechende Fotos umfassen.

Eine weitere vorteilhafte Ausgestaltung der Erfindung liegt in einer Anordnung zur Inbetriebnahme eines Regel- und Steuergerätes für Feldgeräte für eine Gebäudeautomatisierung, wobei zwischen dem Regel- und Steuergerät und einem mobilen Kommunikationsendgerät eines Benutzers eine Kommunikationsverbindung eingerichtet wird; wobei das mobile Kommunikationsendgerät dazu eingerichtet ist, über die Kommunikationsverbindung Datenpunkte des Regel- und Steuergerätes abzufragen und auf ihren jeweiligen Zustand zu überprüfen, wobei ein Datenpunkt den Zustand eines Parameters eines Feldgerätes darstellt; wobei das mobile Kommunikationsendgerät weiter dazu eingerichtet ist, den Zustand der jeweiligen Datenpunkte über eine weitere Kommunikationsverbindung an eine zentrale Stelle zu übertragen. Die Anordnung ist mit handelsüblicher Hardware bzw. Software realisierbar.

Eine weitere vorteilhafte Ausgestaltung der Erfindung liegt darin, dass die Anordnung ein Positionsbestimmungssystem (IPS) umfasst zur Bestimmung des Verbauungsortes des Regel- und Steuergerätes in einem Gebäude. Auch Positionsbestimmungssysteme (satellitengestützt (z.B. GPS) und/oder Indoor-Positionsbestimmungssysteme (IPS)) sind heutzutage weitverbreitet oder leicht nachrüstbar. Durch ein Positionsbestimmungssystem kann ein Benutzer (z.B. Inbetriebsetzter) direkt zum entsprechenden Regel- und Steuergerät mit seinem mobilen Kommunikationsendgerät geleitet werden. Mit Vorteil ist das Regel- und Steuergerät mit einem Sender (z.B. iBeacon) ausgestattet, der Positionsdaten des Gerätes (d.h. den Verbauungsort des Regel- und Steuergerätes) aussendet. Das mobile Kommunikationsendgerät empfängt diese Positionsdaten und navigiert den Benutzer zum Gerät. Dies erspart Kosten und Zeit und vereinfacht die Installation wesentlich.

Durch die umfassende Dokumentation wird auch der Betrieb des Gebäudes wesentlich vereinfacht, Service Arbeiten werden durch das IPS (Indoor Positioning System) beschleunigt und ein allfälliger Austausch von Geräten im Service oder Fehlerfall wird durch die umfassende Dokumentation besser planbar. Die Erfindung sowie vorteilhafte Ausführungen der vorliegenden Erfindung werden am Beispiel der nachfolgenden Figuren erläutert. Dabei zeigen:
- FIG 1: eine erste beispielhafte Anordnung zur Inbetriebnahme eines Regel- und Steuergerätes für Feldgeräte für eine Gebäudeautomatisierung,
- FIG 2: eine zweite beispielhafte Anordnung zur Inbetriebnahme eines Regel- und Steuergerätes für Feldgeräte für eine Gebäudeautomatisierung,
- FIG 3: beispielhafte Use Cases zur Inbetriebnahme eines Regel- und Steuergerätes für Feldgeräte durch ein entsprechend eingerichtetes mobiles Kommunikationsendgerät, und
- FIG 4: ein beispielhaftes Flussdiagramm für ein Verfahren zur Inbetriebnahme eines Regel- und Steuergerätes für Feldgeräte für eine Gebäudeautomatisierung.

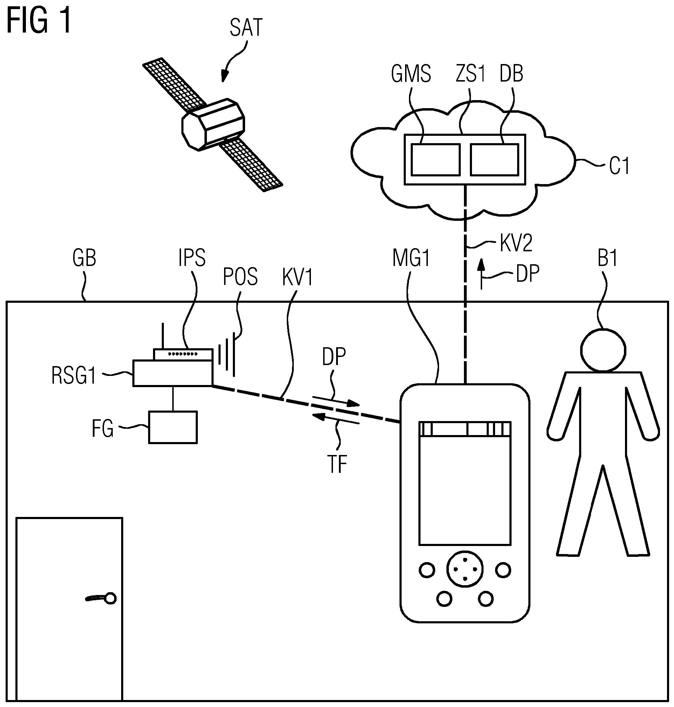

Figur 1 zeigt eine erste beispielhafte Anordnung zur Inbetriebnahme eines Regel- und Steuergerätes RSG1 für Feldgeräte FG für eine Gebäudeautomatisierung, wobei zwischen dem Regel- und Steuergerät RSG1 und einem mobilen Kommunikationsendgerät MG1 (z.B. Smartphone, Tablet-Computer) eines Benutzers B1 (z.B. Inbetriebsetzer) eine Kommunikationsverbindung KV1 einrichtbar ist; wobei das mobile Kommunikationsendgerät MG1 dazu eingerichtet ist über die Kommunikationsverbindung KV1 Datenpunkte DP des Regel- und Steuergerätes RSG1 abzufragen und auf ihren jeweiligen Zustand zu überprüfen, wobei ein Datenpunkt DP den Zustand eines Parameters eines Feldgerätes FG darstellt; und wobei das mobile Kommunikationsendgerät MG1 weiter dazu eingerichtet ist, den Zustand der Datenpunkte DP über eine weitere Kommunikationsverbindung KV2 an eine zentrale Stelle ZS zu übertragen. Mit Vorteil handelt es sich bei den Kommunikationsverbindungen KV1 und KV2 um drahtlose Verbindungen (z.B. Funkverbindungen, wie WLAN). Mit Vorteil handelt es sich bei der Kommunikationsverbindung KV1 um WLAN-, NFC- oder Bluetooth-Verbindungen.

Das Regel- und Steuergerät RSG1 ist üblicherweise dazu eingerichtet ein oder mehrere Feldgeräte FG für eine Komfortsteuerung (z.B. Heizen, Lüften, Klima (HLK)) in einem Gebäude zu steuern bzw. zu regeln. Das mobile Kommunikationsendgerät MG1 ist mit einem Softwareprogramm (z.B. App) ausgestattet, mit der der Bediener B1 Testfälle an das Regel- und Steuergerätes RSG1 senden kann und die durch einen jeweiligen Testfall betroffenen Datenpunkte im Regel- und Steuergerät RSG1 abfragen kann. Die Zustände der Datenpunkte können auf dem mobilen Kommunikationsendgerät MG1 dargestellt und abgespeichert werden. Über die Kommunikationsverbindung KV2 können die Zustände der Datenpunkte DP an eine zentrale Stelle ZS weitergeleitet werden. Dies kann online (in Echtzeit) oder in einem Batchbetrieb (d.h. zu definierten Zeitpunkten) erfolgen. Bei der zentralen Stelle ZS kann es sich z.B. um eine Gebäudeleitstelle oder ein Gebäudemanagementsystem mit einem entsprechenden Server handeln. Mit Vorteil werden die Zustände der Datenpunkte DP in der zentralen Stelle ZS in einer Datenbank DB gespeichert. In der zentralen Stelle ZS können die empfangenen Daten zur Fortschrittskontrolle bei der Inbetriebnahme eines Gebäudes verwendet werden. Die empfangenen Daten können in der zentralen Stelle ZS weiter analysiert und ausgewertet werden und z.B. für die Service- und Wartungsplanung im Gebäude GB verwendet werden.

Mit Vorteil umfasst die Anordnung ein Positionsbestimmungssystem (IPS, SAT) zur Bestimmung des Verbauungsortes des Regel- und Steuergerätes RSG1 im Gebäude GB. Beim Positionsbestimmungssystem kann es sich um ein satellitengestütztes Positionsbestimmungssystem handeln, z.B. GPS und/oder um ein Indoor-Positionsbestimmungssystem (z.B. iBeacon von Apple). Mit Vorteil basiert das Indoor-Positionsbestimmungssystem auf Bluetooth Low Energy (BLE). Mit Vorteil ist das Regel- und Steuergerät RSG1 mit einem Funksender (z.B. iBeacon) ausgestattet, der die Positionsdaten POS des Regel- und Steuergerätes RSG1 aussendet. Die Positionsdaten werden vom mobilen Kommunikationsendgerät MG1 des Benutzers B1 empfangen. Basierend auf den empfangenen Positionsdaten POS navigiert das mobile Kommunikationsendgerät MG1 den Benutzer zum Regel- und Steuergerät RSG1. Regel- und Steuergeräte RSG1 sind in einem Gebäude GB oft in deiner Decke oder unter einem Fussboden verbaut. Die Navigation zum Regel- und Steuergerät RSG1 bedeutet u.a. Zeitersparnis für den Benutzer B1.

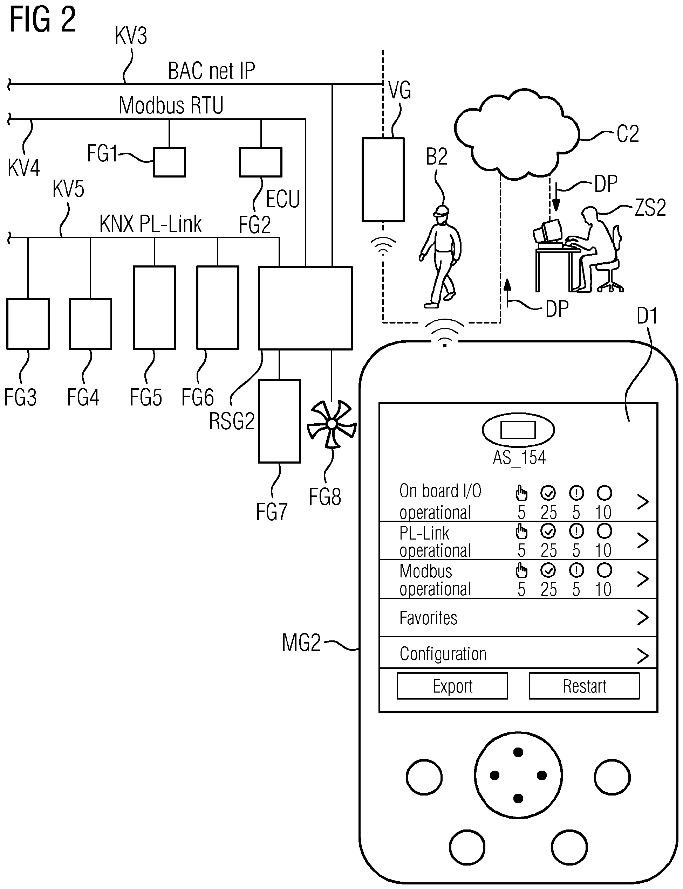

Figur 2 zeigt eine zweite beispielhafte Anordnung zur Inbetriebnahme eines Regel- und Steuergerätes RSG2 für Feldgeräte FG1 - FG8 für eine Gebäudeautomatisierung, wobei zwischen dem Regel- und Steuergerät RSG2 und einem mobilen Kommunikationsendgerät MG2 eines Benutzers B2 eine Kommunikationsverbindung (z.V. WLAN) einrichtbar ist; wobei das mobile Kommunikationsendgerät MG2 dazu eingerichtet ist über die Kommunikationsverbindung Datenpunkte DP des Regel- und Steuergerätes RSG2 abzufragen und auf ihren jeweiligen Zustand zu überprüfen, wobei ein Datenpunkt DP den Zustand eines Parameters eines Feldgerätes FG1 - FG8 darstellt; und wobei das mobile Kommunikationsendgerät MG2 weiter dazu eingerichtet ist, den Zustand der Datenpunkte DP über eine weitere Kommunikationsverbindung C2 (z.B. Cloud-Verbindung über WLAN bzw. Internet) an eine zentrale Stelle ZS2 zu übertragen.

Wenn das Regel- und Steuergerät RSG2 keine Kommunikationsverbindung zum mobilen Kommunikationsendgerät MG2 bereitstellt, kann der Bediener beim Regel- und Steuergerät RSG2 ein Verbindungsgerät VG (z.B. WLAN-Stick) installieren, um eine Verbindung zwischen dem mobilen Kommunikationsendgerät MG2 und dem Regel- und Steuergerät RSG2 zu installieren. Prinzipiell kann auch eine Kabelverbindung zwischen dem mobilen Kommunikationsendgerät MG2 und dem Regel- und Steuergerät RSG2 verwendet werden.

In der Darstellung gemäss Figur 2 sollen mit dem Regel- und Steuergerätes RSG2 die Feldgeräte FG1 - FG8 (z.B. Thermostate, Stellglieder, Ventilator) geregelt bzw. gesteuert werden. Die Feldgeräte FG1 - FG8 sind mit dem Regel- und Steuergerät RSG2 über folgende beispielhafte Kommunikationsmechanismen verbunden: BACnet IP, Modbus RTU, oder KNX PL-Link.

Der Benutzer B2 (z.B. Inbetriebsetzer) ist mit einem mobilen Kommunikationsendgerät MG2 (z.B. Smartphone, Tablet-Computer) ausgestattet. Mit dem mobilen Kommunikationsendgerät MG2 kann der Benutzer B2 Kommunikationsverbindungen zum Regel- und Steuergerätes RSG2 und zu einer zentralen Stelle ZS2 einrichten. Die Kommunikationsverbindungen können z.B. über WLAN oder über das Internet eingerichtet werden. Die Kommunikationsverbindung zur zentralen Stelle ZS2 kann z.B. über einen Server in einer Cloud C2 erfolgen.

Das mobile Kommunikationsendgerät MG2 verfügt über ein Softwareprogramm (z.B. App), um Datenpunkte DP der Feldgeräte FG1 - FG8, die am Regel- und Steuergerät RSG2 angeschlossen sind, in Betrieb zu nehmen und/oder zu testen. Das Softwareprogramm (z.B. App zur Inbetriebnahme und Testen des Regel- und Steuergerätes RSG2) kann z.B. über einen Internet-Download auf das mobile Kommunikationsendgerät MG2 geladen werden. Die für einen jeweiligen Controller (Regel- und Steuergerät) benötigte Inbetriebnahme-/Testsoftware kann auch z.B. durch das Scannen eines am Controller sichtbar angebrachten QR Codes auf das mobile Kommunikationsendgerät MG2 (z.B. Smartphone) geladen werden. Kommunikationsendgeräte MG2 sind üblicherweise mit einem Scan-Programm ausgestattet bzw. durch einen Download leicht damit nachrüstbar (Scan-App).

Dieses Softwareprogramm (Inbetriebnahme-/Testsoftware) bietet z.B. eine Online-Sicht auf die Datenpunkte DP der jeweiligen Feldgeräte FG1 - FG8 dadurch kann die Inbetriebnahme der jeweiligen zu testenden Datenpunkte DP eines Feldgerätes sehr schnell und einfach erfolgen. Ausserdem erfolgt eine zuverlässige und einfache Dokumentation der Inbetriebnahme bzw. des Tests. Die Online-Sicht auf die Datenpunkte DP erfolgt mit Vorteil über eine entsprechende Visualisierung auf dem Display D des mobilen Kommunikationsendgerätes MG2.

Die Zustände der getesteten Datenpunkte DP werden vom mobilen Kommunikationsendgerät MG2 an die zentrale Stelle ZS2 weitergeleitet. Dies kann online oder über einen Batchlauf erfolgen. Mit Vorteil werden die für ein Regel- und Steuergerät RSG2 relevanten Datenpunkte DP in einem Datencontainer (z.B. Liste, Array) gesammelt und an die zentrale Stelle ZS2 gesendet. In der zentralen Stelle ZS2 können diese Daten weiterverarbeitet oder ausgewertet werden, z.B. in einem Gebäudemanagementsystem, einem Engineeringsystem, oder einem Projektmanagementsystem.

Ein Aspekt der vorliegenden Erfindung liegt in der Verknüpfung von multimedialen Funktionen (Navigation, Kamera, Audio Notiz und textuelle Eingabe) eines mobilen Kommunikationsendgerätes (z.B. Smartphone, Tablet-Computer) und der Online-Sicht der Datenpunkte, die zu testen sind. Damit wird die Einfachheit der Inbetriebnahme von Datenpunkten und Geräten insbesondere im Raum mit effizienter Dokumentation sichergestellt.

Bei der Gebäudeautomatisierung werden die Controller (Regel- und Steuergeräte) dezentral im jeweiligen Raum, in dem die Steuerung und Regelung durchgeführt wird, installiert. Dies bedingt, dass bei der Inbetriebnahme der Controller schnell lokalisiert werden muss, um auftretende Probleme bei der Inbetriebnahme zu diagnostizieren. Durch einen Funksensor (z.B. Beacon), der mit dem Controller verbunden ist, bzw. im Controller installiert ist, kann dieser mittels des entsprechenden Softwareprogramms (z.B. Mobile Commissioning App) schnell lokalisiert werden und somit wird zeitintensive Suche nach dem Controller auf ein Minimum reduziert. So können z.B. auch Subunternehmer, die über keine Ortskenntnisse der Installation der Controller verfügen, beauftragt werden, die Inbetriebnahmetests mit sehr kurzem Einschulungsaufwand durchzuführen. Durch die Unterstützung der multimedialen Möglichkeiten des mobilen Kommunikationsendgerätes (Foto- & Audio Funktion, Texteingabe, Auswahl des Testzustandes in der Commissioning App) in Verbindung mit der Online-Sicht der Datenpunkte im Softwareprogramms (Mobile Commissioning App) kann die Inbetriebnahme sehr einfach und schnell beim jeweiligen zu testenden Datenpunkt dokumentiert werden. Insbesondere das Foto dokumentiert sehr anschaulich Inbetriebnahmeprobleme beim verknüpften Datenpunkt. Somit wird eine einfache und schnelle Dokumentation mit allen möglichen Daten zu Details durch das Softwareprogramm (Mobile Commissioning App) erstellt. Die nachfolgende Behebung der Inbetriebnahmeprobleme kann somit zielgerichtet initiiert werden. Damit ergibt sich eine Effizienzsteigerung bei der Inbetriebnahme.

Bei jedem Datenpunkt kann im Softwareprogramm (Mobile Commissioning App) der Testzustand ("nicht geprüft", "fehlerhaft", "erfolgreich geprüft") sehr einfach festgehalten werden. Nach dem Abschluss der Inbetriebnahmetests werden die gesammelten Daten z.B. per E-Mail an den Projektleiter zur Auswertung und weiteren Bearbeitung gesandt. Dieser kann sich einfach einen Überblick (und auf diesen Daten aufbauend Statistiken) bezüglich Fortschritt und auftretender Probleme verschaffen. Der Projektleiter kann den Fortschritt basierend auf den mit dem Softwareprogramm (Mobile Commissioning App) gesammelten Daten einfach nachvollziehen und kann dies auch gegenüber dem Auftraggeber darstellen und die zielgerichtete Behebung der Probleme veranlassen.

Die Dokumentation von Zusatzaufwänden durch Probleme, die durch die Fotos, die dem Datenpunkt zugewiesen sind, ist zielgerichtet unterstützt und damit ist die Erstellung von Nachträgen deutlich vereinfacht. Durch den Vergleich der Inbetriebnahmezustände zu verschiedenen Zeitpunkten basierend auf der Erfassung der Daten vom Softwareprogramm (Mobile Commissioning App) kann der Fortschritt der Inbetriebnahme auch gegenüber dem Auftraggeber visualisiert werden. Auf dieser Daten Basis können Teilrechnungen für erfolgreich abgeschlossene Tätigkeiten dokumentiert und erstellt werden. Zusatzaufwände für die Ermittlung von Problemen bei der Inbetriebnahme können auf der Basis der gesammelten Daten vom Softwareprogramm (Mobile Commissioning App) gegenüber dem Auftraggeber veranschaulicht werden und die Abrechnung wird damit vereinfacht und deutlich besser nachvollziehbar. Weiters kann bei mangelnder Vorleistung von anderen Firmen ein Zeitverzug bzw. erhöhter Mehraufwand bei der Installation der Controller durch die umfassende elektronische Dokumentation einfach begründet werden.

Jede Zustandsänderung wird im Softwareprogramm (Mobile Commissioning App) in der Verbindung zum Datenpunkt gespeichert. Diese Daten werden exportiert und im Büro weiter bearbeitet ("Office Data processing") und archiviert. Damit wird Geschichte des Datenpunkts mit allen Testzuständen archiviert und kann bei späteren Erweiterungen oder Problemanalysen herangezogen werden.

Weitere Aspekte der Erfindung:
- Die Erfindung nutzt nun die multimedialen Möglichkeiten von einem mobilen Kommunikationsendgerät (z.B. Smartphone) in Verbindung mit den Online-Datenpunkten, die am mobilen Kommunikationsendgerät mit aktuellen Werten, Zuständen etc. angezeigt werden.
- Somit können Inbetriebnahmeprobleme einfach mit Foto, Audio-Aufnahme, Textnotizen, oder Zuordnung der Verantwortung zur Behebung versehen bzw. dokumentiert werden.
- Korrekt funktionierend Datenpunkte bzw. Geräte können übersichtlich als erfolgreich geprüft markiert werden.
- Alle beim Kunden erfassten Daten können in einem DatenContainer zusammengefasst werden und somit benutzerfreundlich an den Projektleiter übertragen werden.
- Der Projektleiter kann sich einfach eine Auswertung der erfolgreich getesteten Datenpunkte und Geräte erstellen und kann Fehler eindeutig durch Zustand im System, Foto, Audio Notiz und Text nachvollziehen und die Behebung zeitnah veranlassen.
- Durch Indoor Navigation kann der Controller (Regel- und Steuergerät), an dem die Datenpunkte zu testen sind, einfach mit dem mobilen Kommunikationsendgerät lokalisiert werden.

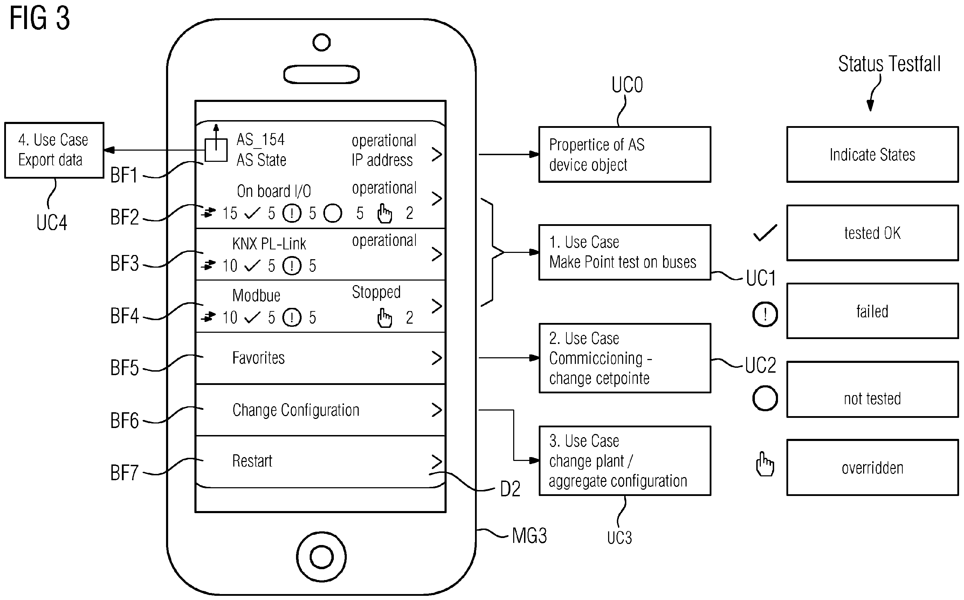

Figur 3 zeigt beispielhafte Use Cases (Anwendungsfälle) zur Inbetriebnahme eines Regel- und Steuergerätes (z.B. AS) für Feldgeräte durch ein entsprechend eingerichtetes mobiles Kommunikationsendgerät MG3. Auf dem mobilen Kommunikationsendgerät MG3 ist eine Software (z.B. App) zur Inbetriebnahme und zum Testen der Datenpunkte von durch das Regel- und Steuergerät gesteuerten Feldgeräte installiert. Mit Vorteil hat die Software eine grafische Bedienoberfläche, die über einen Touchscreen D2 (berührungssensitive Oberfläche) von einem Benutzer bedienbar ist. Die grafische Bedienoberfläche weist beispielhafterweise die Bedienfelder BF1 - BF7 auf:
BF1 ("AS State", d.h. Gerätezustand): zur Abfrage von Eigenschaften des Regel- und Steuergerätes bzw. Feldgerätes (z.B. Betriebsmodus (z.B. "operational" (aktiv), "idle" (inaktiv), "stopped" (beendet)) oder die jeweilige IP-Adresse.
BF2 ("On board I/O", d.h. Ein-/Ausgabe): zur Anzeige bzw. Abfrage des aktuellen E/A-Zustandes (z.B. "operational" (aktiv), "idle" (inaktiv), "stopped" (beendet)).
BF3 ("KNX PL-Link", d.h. KNX Verbindung): zur Anzeige bzw. Abfrage des Zustandes einer vorhandenen KNX Powerline Verbindung (z.B. "operational" (aktiv), "idle" (inaktiv), "stopped" (beendet)).
BF4 ("Modbus", z.B. Kommunikation über Modbus RTU): zur Anzeige bzw. Abfrage des Zustandes einer vorhandenen Modbus Verbindung (z.B. "operational" (aktiv), "idle" (inaktiv), "stopped" (beendet)).
BF5 ("Favorites", Favoriten): zur Anzeige bzw. Auswahl von wichtigen Datenpunkten / Sollwerten / Einstellwerten / Kenngrössen. Diese können bei Bedarf auch in Hierarchie gruppiert und zusammengefasst werden.
BF6 ("Change Configuration", Änderung der Konfiguration): zur Änderung der Konfiguration.
BF7 ("Restart", Restart einleiten): zum Einleiten eines Restarts des Softwareprogramms, z.B. für eine neue Testfallabarbeitung.

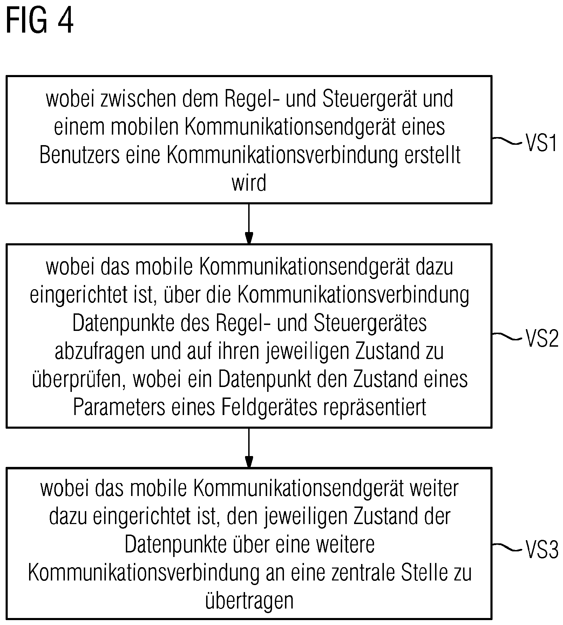

In der Darstellung gemäss Figur 3 sind folgende beispielhafte Use Cases (Anwendungsfälle) dargestellt:
Anwendungsfall UC0 (Properties of AS device object): Abfrage der Eigenschaften des Auutomatisierungsgerätes bzw. der Automationsstation (AS) oder Controllers für eine detaillierte Analyse geprüft werden.
Anwendungsfall UC1 (Make Point test on buses): Test von Datenpunkten auf Bus (z.B. "On board I/O" - Test, "KNX PL-Link" - Test, "Modbus" - Test).
Anwendungsfall UC2 (Commissioning - change setpoints): Inbetriebnahme - Sollwerte / Zeitverzögerungen / Grenzwerte ändern.
Anwendungsfall UC3 (change plant / aggregate configuration): Ändern der Betriebsstättenkonfiguration bzw. der Aggregatskonfiguration.
Anwendungsfall UC4 (Export data): Exportieren der Datenpunkte (an die zentrale Stelle). Alle Daten, die im Mobilgerät gesammelt wurden, können in einem komprimierten Daten Container an ein BIM übermittelt werden. Am rechten Rand in der Darstellung gemäss Figur 4 ist in beispielhafter Weise der jeweilige Zustand (Status Testfall) eines Datenpunktes dargestellt:
   - "tested OK" (d.h. Testfall erfolgreich durchgeführt)
   - "failed" (d.h. Testfall fehlerhaft durchgeführt)
   - "not tested" (d.h. Datenpunkt nicht getestet)
   - "overridden" (d.h. Datenpunkt ausser Kraft gesetzt).

Die vorliegende Erfindung weist u.a. folgende vorteilhafte Merkmale auf:
- Online Kommunikation über BACnet IP zum Controller einer Plattform (IT Plattform) zur Gebäudeautomatisierung.
- Fotos beim Datenpunkt erstellen und an zentrale Stelle senden.
- Audio Notiz beim Datenpunkt erstellen und an zentrale Stelle senden.
- Export der Commissioning/Inbetriebnahme- Daten an zentrale Stelle.
- Indoor Navigation via Beacon (Leuchtfeuer das Positionsdaten aussendet) zum Regel- und Steuergerät (Controller) .
- Auswertung der Commissioning/Inbetriebnahme- Daten kann über Tabellenkalkulationsprogramm (z.B. Excel) und/oder Projektmanagementtool (z.B. MS Project) gemacht werden.
- Automatische Fortschrittskontrolle bei Inbetriebnahmeprojekten.
- Unterstützung des Testprozesses (vor Ort) bei Inbetriebnahmeprojekten.
- Einfache Konfigurierung von Regel- und Steuergeräten vor Ort möglich.
- Die für einen jeweiligen Controller (Regel- und Steuergerät) benötigte Inbetriebnahme-Software kann z.B. durch das Scannen eines am Controller sichtbar angebrachten QR Codes auf das mobile Kommunikationsendgerät (z.B. Smartphone) geladen werden.
- Die Inbetriebnahme-Software (Commissioning App) auf dem mobilen Kommunikationsendgerät kann ein IP-Netzwerk nach angeschlossenen Feldgeräten (z.B. BACnet Geräte). Dadurch ist eine systematische und vollständige Inbetriebnahme der vorhandenen Feldgeräte gewährleistet. Zu testende Geräte und die zu testenden Datenpunkte können durch die Inbetriebnahme-Software von einem Inbetriebsetzer einfach ausgewählt werden.
- Daten eines zu testenden Gerätes können ausgewählt und auf dem Display des mobilen Kommunikationsendgerätes angezeigt werden
- Die Inbetriebnahme-Software (Commissioning App) ermöglicht ein einfaches Ändern von Sollwerten in den Feldgeräten bzw. im Controller.
- Die Konfiguration/Parametrierung in den Feldgeräten bzw. im Controller kann über einen file-download (z.B. eine erprobte und geprüfte Grundkonfiguration oder auch ein Backup von diesem Gerät) auf das Gerät erfolgen oder direkt am Controller online (d.h. der Benutzer kann die Grundkonfiguration des Controllers ohne zusätzliche Daten direkt und somit sehr effektiv ändern).

Figur 4 zeigt ein beispielhaftes Flussdiagramm für ein Verfahren zur Inbetriebnahme eines Regel- und Steuergerätes für Feldgeräte für eine Gebäudeautomatisierung,
(VS1) wobei zwischen dem Regel- und Steuergerät und einem mobilen Kommunikationsendgerät eines Benutzers eine Kommunikationsverbindung erstellt wird;
(VS2) wobei das mobile Kommunikationsendgerät dazu eingerichtet ist, über die Kommunikationsverbindung Datenpunkte des Regel- und Steuergerätes abzufragen und auf ihren jeweiligen Zustand zu überprüfen, wobei ein Datenpunkt den Zustand eines Parameters eines Feldgerätes repräsentiert; und
(VS3) wobei das mobile Kommunikationsendgerät weiter dazu eingerichtet ist, den jeweiligen Zustand der Datenpunkte über eine weitere Kommunikationsverbindung an eine zentrale Stelle (z.B. Gebäudeleitstelle, Projektserver, Gebäudemanagementsystem) zu übertragen (die Übertragung kann in Echtzeit, im Batch-Betrieb, oder parallel zur Abfrage und Überprüfung der jeweiligen Zustände der Datenpunkte erfolgen). Mobile Kommunikationsendgeräte (z.B. Smartphones, Tablet-Computer) sind heutzutage weitverbreitet und mit leistungsfähigen Prozessoren und Speichern ausgestattet. Durch das Installieren eines entsprechenden Programmes (z.B. durch Herunterladen einer App) wird das mobile Kommunikationsendgerät eingerichtet, das Verfahren auszuführen. Die Infrastruktur zur Durchführung des Verfahrens ist in Gebäuden üblicherweise vorhanden, bzw. durch handelsübliche Hardware leicht und schnell nachrüstbar. Mit Vorteil wird der Verbauungsort des Regel- und Steuergerätes in einem Gebäude durch ein entsprechendes Positionssignal dem mobilen Kommunikationsendgerät mitgeteilt. Mit Vorteil wird das Positionssignal vom Regel- und Steuergerät ausgesendet und vom mobilen Kommunikationsendgerät empfangen. Das mobile Kommunikationsendgerät kann, basierend auf dem empfangenen Positionssignal den Bediener (z.B. Inbetriebsetzer) zum Verbauungsort des Regel- und Steuergerätes navigieren, mit entsprechender Navigationssoftware. Mobile Kommunikationsendgeräte (z.B. Smartphone, Tablet-Computer) sind heutzutage üblicherweise mit entsprechender Navigationssoftware ausgestattet, bzw. sind sie durch einen entsprechenden Download aufrüstbar.

### Bezugszeichen

- SAT, IPS: Positionsbestimmungssystem
- POS: Positionsdaten
- B1, B2: Benutzer
- MG1 - MG3: Mobiles Gerät
- D1, D2: Display
- ZS1, ZS2: Zentrale Stelle
- GMS: Gebäudemanagementsystem
- C1, C2: Cloud
- PL: Projektleiter
- DB: Datenbank
- GB: Gebäude
- KV1 - KV5: Kommunikationsverbindung
- TF: Testfall
- DP: Datenpunkt
- RSG1, RSG2: Regel- und Steuergerät
- VG: Verbindungsgerät
- UC0 - UC4: Use Case
- FG, FG1 - FG8: Feldgerät
- BF1 - BF7: Bedienfelder
- VS1 - VS3: Verfahrensschritt

## Patentansprüche

1. Verfahren zur Inbetriebnahme eines Regel- und Steuergerätes (RSG1, RSG2) für Feldgeräte (FG, FG1 - FG8) für eine Gebäudeautomatisierung,
(VS1) wobei zwischen dem Regel- und Steuergerät (RSG1, RSG2) und einem mobilen Kommunikationsendgerät (MG1 - MG3) eines Benutzers (B1, B2) eine Kommunikationsverbindung (KV1) erstellt wird;
(VS2) wobei das mobile Kommunikationsendgerät (MG1 - MG3) dazu eingerichtet, ist über die Kommunikationsverbindung (KV1) Datenpunkte (DP) des Regel- und Steuergerätes (RSG1, RSG2) abzufragen und auf ihren jeweiligen Zustand zu überprüfen, wobei ein Datenpunkt (DP) den Zustand eines Parameters eines Feldgerätes (FG, FG1 - FG8) repräsentiert; und
(VS3) wobei das mobile Kommunikationsendgerät (MG1 - MG3) weiter dazu eingerichtet ist, den jeweiligen Zustand der Datenpunkte (DP) über eine weitere Kommunikationsverbindung (KV2) an eine zentrale Stelle (ZS1, ZS2) zu übertragen;
wobei der Verbauungsort des Regel- und Steuergerätes (RSG1, RSG2) in einem Gebäude durch ein entsprechendes Positionssignal (POS) dem mobilen Kommunikationsendgerät (MG1 - MG3) mitgeteilt wird;
wobei das Positionssignal (POS) vom Regel- und Steuergerät (RSG1, RSG2) ausgesendet wird; und
wobei die an die zentrale Stelle (ZS1, ZS2) gesendeten jeweiligen Zustände der Datenpunkte (DP) in ein Gebäudemodell (BIM) für das entsprechende Gebäude (GB) übertragen werden.

2. Verfahren nach einem der vorstehenden Ansprüche, wobei die Kommunikation zwischen dem Regel- und Steuergerät (RSG1, RSG2) und dem mobilen Kommunikationsendgerät (MG1 - MG3) über eine drahtlose Verbindung (KV1) erfolgt.

3. Verfahren nach Anspruch 2, wobei die drahtlose Verbindung (KV1) zwischen dem Regel- und Steuergerät (RSG1, RSG2) und dem mobilen Kommunikationsendgerät (MG1 - MG3) über ein vom Benutzer (B1, B2) am Regel- und Steuergerät (RSG1, RSG2) installiertes Gerät (VG) erfolgt.

4. Verfahren nach einem der vorstehenden Ansprüche, wobei die an die zentrale Stelle (ZS1, ZS2) gesendeten Zustände der Datenpunkte (DP) in ein Projektmanagementsystem übertragen werden.

5. Verfahren nach einem der vorstehenden Ansprüche, wobei ein erkannter Fehlerzustand in einem Datenpunkt (DP) auf dem mobilen Kommunikationsendgerät (MG1 - MG3) angezeigt wird und wobei der erkannte Fehlerzustand vom Bediener (B1, B2) mit weiteren Daten versehen, an die zentrale Stelle (ZS1, ZS2) gesendet wird.

6. Verfahren nach einem der vorstehenden Ansprüche, wobei der an die zentrale Stelle (ZS1, ZS2) übertragene Zustand der Datenpunkte (DP) weitere Informationen umfasst, insbesondere eine Audionotiz und/oder ein Foto des dazugehörigen Feldgerätes (FG, FG1 - FG8).

7. Verfahren nach einem der vorstehenden Ansprüche, wobei durch die zentrale Stelle (ZS1, ZS2) eine Auswertung der empfangenen Daten erfolgt und entsprechende Massnahmen, insbesondere die Mitteilung an das Servicepersonal welche Ersatzteile mitzunehmen sind, eingeleitet werden.

8. Anordnung zur Inbetriebnahme eines Regel- und Steuergerätes (RSG1, RSG2) für Feldgeräte (FG, FG1 - FG8) für eine Gebäudeautomatisierung,
wobei die Anordnung das Regel- und Steuergerät (RSG1, RSG2), ein mobiles Kommunikationsendgerät (MG1- MG3) eines Benutzers (B1, B2) und eine zentrale Stelle (ZS1, ZS2) umfasst,
wobei zwischen dem Regel- und Steuergerät (RSG1, RSG2) und dem mobilen Kommunikationsendgerät (MG1 - MG3) eine Kommunikationsverbindung (KV1) einrichtbar ist;
wobei das mobile Kommunikationsendgerät (MG1 - MG3) dazu eingerichtet ist, über die Kommunikationsverbindung (KV1) Datenpunkte (DP) des Regel- und Steuergerätes (RSG1, RSG2) abzufragen und auf ihren jeweiligen Zustand zu überprüfen, wobei ein Datenpunkt (DP) den Zustand eines Parameters eines Feldgerätes (FG, FG1 - FG8) darstellt; und
wobei das mobile Kommunikationsendgerät (MG1 - MG3) weiter dazu eingerichtet ist, den Zustand der jeweiligen Datenpunkte (DP) über eine weitere Kommunikationsverbindung (KV2) an die zentrale Stelle (ZS1, ZS2) zu übertragen,
wobei das Regel- und Steuergerät (RSG1, RSG2) eingerichtet ist seinen Verbauungsort in einem Gebäude durch ein entsprechendes Positionssignal (POS) dem mobilen Kommunikationsendgerät (MG1 - MG3) mitzuteilen; und
wobei die zentrale Stelle (ZS1, ZS2) eingerichtet ist die an die zentrale Stelle (ZS1, ZS2) gesendeten jeweiligen Zustände der Datenpunkte (DP) in ein Gebäudemodell (BIM) für das entsprechende Gebäude (GB) zu übertragen.

9. Anordnung nach Anspruch 8, weiter umfassend ein Positionsbestimmungssystem (IPS) zur Bestimmung des Verbauungsortes des Regel- und Steuergerätes (RSG1, RSG2) in einem Gebäude (GB) .

## Claims

1. Method for commissioning a regulation and control device (RSG1, RSG2) for field devices (FG, FG1 - FG8) for building automation,
(VS1) wherein a communication connection (KV1) is created between the regulation and control device (RSG1, RSG2) and a mobile communication terminal (MG1 - MG3) of a user (B1, B2);
(VS2) wherein the mobile communication terminal (MG1 - MG3) is configured to query data points (DP) of the regulation and control device (RSG1, RSG2) via the communication connection (KV1) and to review the respective state thereof, wherein a data point (DP) represents the state of a parameter of a field device (FG, FG1 - FG8); and
(VS3) wherein the mobile communication terminal (MG1 - MG3) is further configured to transfer the respective state of the data points (DP) to a central point (ZS1, ZS2) via a further communication connection (KV2);
wherein the installation site of the regulation and control device (RSG1, RSG2) in a building is also communicated to the mobile communication terminal (MG1 - MG3) by a corresponding position signal (POS);
wherein the position signal (POS) is transmitted by the regulation and control device (RSG1, RSG2); and
wherein the respective states of the data points (DP) sent to the central point (ZS1, ZS2) are transferred into a building model (BIM) for the corresponding building (GB).

2. Method according to one of the preceding claims, wherein the communication between the regulation and control device (RSG1, RSG2) and the mobile communication terminal (MG1 - MG3) takes place via a wireless connection (KV1).

3. Method according to claim 2, wherein the wireless connection (KV1) between the regulation and control device (RSG1, RSG2) and the mobile communication terminal (MG1 - MG3) takes place via a device installed by the user (B1, B2) at the regulation and control device (RSG1, RSG2).

4. Method according to one of the preceding claims, wherein the states of the data points (DP) sent to the central point (ZS1, ZS2) are transferred into a project management system.

5. Method according to one of the preceding claims, wherein an identified error state in a data point (DP) is indicated on the mobile communication terminal (MG1 - MG3) and wherein the identified error state is provided with further data by the operator (B1, B2) and sent to the central point (ZS1, ZS2).

6. Method according to one of the preceding claims, wherein the state of the data points (DP) transferred to the central point (ZS1, ZS2) comprises further information, in particular an audio notice and/or a photo of the associated field device (FG, FG1 - FG8).

7. Method according to one of the preceding claims, wherein the central point (ZS1, ZS2) evaluates the received data and introduces corresponding measures, in particular the communication to the service personnel of which replacement parts are to be also taken.

8. Arrangement for commissioning a regulation and control device (RSG1, RSG2) for field devices (FG, FG1 - FG8) for building automation,
wherein the arrangement comprises the regulation and control device (RSG1, RSG2), a mobile communication terminal (MG1 - MG3) of a user (B1, B2) and a central point (ZS1, ZS2),
wherein a communication connection (KV1) can be established between the regulation and control device (RSG1, RSG2) and the mobile communication terminal (MG1 - MG3);
wherein the mobile communication terminal (MG1 - MG3) is configured to query data points (DP) of the regulation and control device (RSG1, RSG2) via the communication connection (KV1) and to review the respective state thereof, wherein a data point (DP) represents the state of a parameter of a field device (FG, FG1 - FG8); and
wherein the mobile communication terminal (MG1 - MG3) is further configured to transfer the state of the respective data points (DP) to the central point (ZS1, ZS2) via a further communication connection (KV2);
wherein the regulation and control device (RSG1, RSG2) is configured to also communicate its installation site in a building to the mobile communication terminal (MG1 - MG3) by way of a corresponding position signal (POS); and
wherein the central point (ZS1, ZS2) is configured to transfer the respective states of the data points (DP) sent to the central point (ZS1, ZS2) into a building model (BIM) for the corresponding building (GB).

9. Arrangement according to claim 8, further comprising a position determining system (IPS) for determining the installation site of the regulation and control device (RSG1, RSG2) in a building (GB).

## Revendications

1. Procédé de mise en service d'un appareil de réglage et de commande (RSG1, RSG2) pour appareils de terrain (FG, FG1 - FG8) pour une automatisation de bâtiment,
(VS1) une liaison de communication (KV1) étant établie entre l'appareil de réglage et de commande (RSG1, RSG2) et un terminal de communication mobile (MG1 - MG3) d'un utilisateur (B1, B2) ; (VS2) le terminal de communication mobile (MG1 - MG3) étant configuré pour interroger, via la liaison de communication (KV1), des points de données (DP) de l'appareil de réglage et de commande (RSG1, RSG2) et vérifier leur état respectif, un point de données (DP) représentant l'état d'un paramètre d'un appareil de terrain (FG, FG1 - FG8) ; et
(VS3) le terminal de communication mobile (MG1 - MG3) étant en outre configuré pour transmettre l'état respectif des points de données (DP) via une autre liaison de communication (KV2) à un poste central (ZS1, ZS2) ;
l'emplacement de montage de l'appareil de réglage et de commande (RSG1, RSG2) dans un bâtiment étant communiqué au terminal de communication mobile (MG1 - MG3) par un signal de position correspondant (POS) ;
le signal de position (POS) étant émis par l'appareil de réglage et de commande (RSG1, RSG2) ; et
les états respectifs des points de données (DP) envoyés au poste central (ZS1, ZS2) étant transférés dans un modèle de bâtiment (BIM) pour le bâtiment correspondant (GB).

2. Procédé selon l'une des revendications précédentes, la communication entre l'appareil de réglage et de commande (RSG1, RSG2) et le terminal de communication mobile (MG1 - MG3) ayant lieu via une liaison sans fil (KV1).

3. Procédé selon la revendication 2, la liaison sans fil (KV1) entre l'appareil de réglage et de commande (RSG1, RSG2) et le terminal de communication mobile (MG1 - MG3) se faisant via un appareil (VG) installé par l'utilisateur (B1, B2) sur l'appareil de réglage et de commande (RSG1, RSG2).

4. Procédé selon l'une des revendications précédentes, les états des points de données (DP) envoyés au poste central (ZS1, ZS2) étant transférés dans un système de gestion de projet.

5. Procédé selon l'une des revendications précédentes, un état de défaut identifié dans un point de données (DP) étant affiché sur le terminal de communication mobile (MG1 - MG3) et l'état de défaut identifié étant envoyé avec d'autres données par l'opérateur (B1, B2) au poste central (ZS1, ZS2).

6. Procédé selon l'une des revendications précédentes, l'état des points de données (DP) transmis au poste central (ZS1, ZS2) comprenant d'autres informations, et plus particulièrement une note audio et/ou une photo de l'appareil de terrain associé (FG, FG1 - FG8).

7. Procédé selon l'une des revendications précédentes, le poste central (ZS1, ZS2) effectuant une évaluation des données reçues et introduisant des mesures correspondantes, en particulier la communication, au personnel de service, des pièces de rechange à prendre.

8. Agencement de mise en service d'un appareil de réglage et de commande (RSG1, RSG2) pour appareils de terrain (FG, FG1 - FG8) pour une automatisation de bâtiment,
l'agencement comprenant l'appareil de réglage et de commande (RSG1, RSG2), un terminal de communication mobile (MG1- MG3) d'un utilisateur (B1, B2) et un poste central (ZS1, ZS2) ; entre -l'appareil de réglage et de commande (RSG1, RSG2) et le terminal de communication mobile (MG1 - MG3) pouvant être établie une liaison de communication (KV1) ;
le terminal de communication mobile (MG1 - MG3) étant configuré pour interroger, via la liaison de communication (KV1), des points de données (DP) de l'appareil de réglage et de commande (RSG1, RSG2) et vérifier leur état respectif, un point de données (DP) représentant l'état d'un paramètre d'un appareil de terrain (FG, FG1 - FG8) et
le terminal de communication mobile (MG1 - MG3) étant en outre configuré pour transmettre l'état des points de données respectifs (DP) au poste central (ZS1, ZS2) via une autre liaison de communication (KV2) ;
l'appareil de réglage et de commande (RSG1, RSG2) étant configuré pour communiquer son emplacement de montage dans un bâtiment au terminal de communication mobile (MG1 - MG3) par un signal de position correspondant (POS) et
le poste central (ZS1, ZS2) étant configuré pour transférer les états respectifs des points de données (DP) envoyés au poste central (ZS1, ZS2) dans un modèle de bâtiment (BIM) pour le bâtiment correspondant (GB).

9. Agencement selon la revendication 8, comprenant en outre un système de détermination de position (IPS) pour déterminer l'emplacement de montage de l'appareil de réglage et de commande (RSG1, RSG2) dans un bâtiment (GB).
